# EUROPEAN PATENT SPECIFICATION

(11) **EP 0 823 936 B1**
(45) Date of publication and mention of the grant of the patent: **09.06.2004**
(21) Application number: 96912807.3
(22) Date of filing: 15.04.1996
(51) Int. Cl.: C10G 11/04, C10G 11/05, C07C 4/06

(54) **CATALYTIC CONVERSION WITH MCM-58**
KATALYTISCHE UMWANLDUNG MIT MCM-58
CONVERSION CATALYTIQUE AVEC MCM-58

(30) Priority: 05.05.1995 US 435765
(43) Date of publication of application: 18.02.1998
(73) Proprietor: EXXONMOBIL OIL CORPORATION, Fairfax, VA 22037 (US)
(72) Inventor: CHESTER, Arthur, Warren, Cherry Hill, NJ 08003 (US); KRESGE, Charles, Theodore, West Chester, PA 19380 (US); QUINONES, Augusto, Rodolfo, League City, TX 77573 (US); VALYOCSIK, Ernest, W., Yardley, PA 19067 (US)
(74) Representative: Kador & Partner
(86) International application number: PCT/US1996/005253
(87) International publication number: WO 1996/034930

(56) References cited:
- US-A- 3 758 403
- US-A- 4 309 280
- US-A- 4 927 523
- US-A- 5 110 776
- US-A- 5 126 298
- US-A- 5 437 855
- US-A- 5 441 721

## Description

The present invention relates to a process for converting, e.g., cracking, a hydrocarbon feed over a particular catalyst composition to produce conversion product hydrocarbon compounds of lower molecular weight than feed hydrocarbons, e.g., product comprising a high octane gasoline fraction and increased lower olefins, especially propylene and butylene. The catalyst composition for use herein comprises synthetic porous crystalline MCM-58.

Catalytic cracking operations are commercially employed in the petroleum refining industry to produce useful products, such as high quality gasoline and fuel oils, from hydrocarbon-containing feeds. The endothermic catalytic cracking of hydrocarbons is most commonly practiced in accordance with two known catalytic cracking operations, namely, fluid catalytic cracking (FCC) and moving bed catalytic cracking.

Generally, both fluid catalytic cracking and moving bed operations are commercially practiced in a cyclic mode. During these operations, the hydrocarbon feedstock is contacted with hot, active, solid particulate catalyst without added hydrogen, for example, at pressures of up to about 50 psig and temperatures up to about 650°C. As the hydrocarbon feed is cracked in the presence of cracking catalyst to form more valuable and desirable products, undesirable carbonaceous residue known as "coke" is deposited on the catalyst. The spent catalyst contains coke as well as metals that are present in the feedstock.

In FCC operations, the catalyst is a fine powder with particle sizes of about 20-200 microns in diameter and with an average size of approximately 60-100 microns. The fine powder is propelled upwardly through a riser reaction zone, fluidized and thoroughly mixed with the hydrocarbon feed. The 'hydrocarbon feed is cracked at high temperatures by the catalyst and separated into various hydrocarbon products. The coked catalyst particles are separated from the cracked hydrocarbon products, and after stripping, are transferred into a regenerator where the coke is burnt off to regenerate the catalyst. The regenerated catalyst then flows downwardly from the regenerator to the base of the riser.

The cycles of cracking and regeneration at high flow rates and temperatures have a tendency to physically break down the catalyst into smaller particles, called "fines" which have a diameter of up to 20 microns as compared to the average diameter of the catalyst particle of about 60 to about 100 microns. In determining the unit retention of catalysts, and accordingly their cost efficiency, attrition resistance is a key parameter. While the initial size of the particles can be controlled relatively easily by controlling the initial spray drying of the catalyst, if the attrition resistance is poor, the catalytic cracking unit may produce a large amount of the 0 - 20 micron fines which should not be released into the atmosphere. Commercial catalytic cracking units include cyclones and electrostatic precipitators to prevent fines from becoming airborne. Those skilled in the art appreciate that excessive generation of catalyst fines increases the cost of catalyst to the refiner.

Additionally, the catalyst particles cannot be too large in diameter, or the particles may not be sufficiently fluidized. Therefore, the catalysts are preferably maintained under 120 to 150 microns in diameter.

Another consideration is deposition of coke on the catalyst particles which is generally considered undesirable for two reasons: first, it inevitably results in a decline in catalytic activity to a point where the catalyst is considered to have become "spent"; and second, coke generally forms on the catalyst at the expense of more desired light liquid products. To regenerate the catalytic activity, the hydrocarbon residues of the coke must be burnt off the "spent" catalyst at elevated temperatures in a regenerator.

Current worldwide refinery trends indicate a continuing need to process heavier feed stock. As a result, many refineries will be processing feedstock containing resids or deeper cut gas oils which have high metals contents. The enhancement of octane produced in catalytic cracking operations is an important goal in the preparation of zeolite containing catalysts. The environmental regulations in the United states and abroad, and the phaseout of lead additives for gasolines in both the U.S. and abroad, provide a strong incentive for refineries to use catalysts which produce increased octane gasolines from heavier metals contaminated feedstock.

Therefore, it would be highly desirable to have a catalyst with high attrition resistance. It would also be desirable to provide fluid catalysts having reduced manufacturing costs and improved catalytic activity for octane enhancement. Those skilled in the art will appreciate that improved attrition resistance as well as improved activity will translate into reduced catalyst makeup rates.

U.S. Patent 5,110,776 teaches a method for preparing FCC catalyst comprising modifying the zeolite, e.g., ZSM-5, with phosphorus. U.S. Patent 5,126,298 teaches manufacture of an FCC catalyst comprising zeolite, e.g., ZSM-5, clay, and phosphorus. Phosphorus treatment has been used on faujasite-based cracking catalysts for metals passivation (see U.S. Patents 4,970,183 and 4,430,199); reducing coke make (see U.S. Patents 4,567,152; 4,584,091; and 5,082,815); increasing activity (see U.S. Patents 4,454,241 and 4,498,975); increasing gasoline selectivity (See U.S. Patent 4,970,183); and increasing steam stability (see U.S. Patents 4,765,884 and 4,873,211).

In U.S. Patent 3,758,403, use of large-pore cracking catalyst with large amounts of ZSM-5 additive gives only modest increase in light olefin production. A 100 % increase in ZSM-5 content (from 5 wt.% ZSM-5 to 10 wt.% ZSM-5) increased the propylene yield less than 20 %, and decreased slightly the potential gasoline yield (C₅+ gasoline plus alkylate).

U.S. Patent 4,309,280 teaches adding very small amounts of powdered, neat ZSM-5 catalyst, characterized by a particle size below 5 microns. Adding as little as 0.25 wt.% ZSM-5 powder to the FCC catalyst inventory increased LPG production 50%. Small amounts of neat powder behaved much like larger amounts of ZSM-5 disposed in larger particles.

A way to add a modest amount of ZSM-5 to an FCC unit is disclosed in U.S. Patent 4,994,424. ZSM-5 additive is added to the equilibrium catalyst in a programmed manner so an immediate boost in octane number, typically 1/2-2 octane number, is achieved.

U.S. Patent 4,927,523 teaches a way to add large amounts of ZSM-5 to a unit without exceeding wet gas compressor limits. Large amounts are added and cracking severity is reduced in the FCC unit for several days.

It is an object of the present invention to provide an improved cracking process using an improved catalyst composition.

It is also an object of the present invention to provide an improved process using an improved catalyst composition to enhance production of valuable light olefins, e.g., propylene and butylene.

These and other objects are achieved by the present invention which provides a process for converting feedstock hydrocarbon compounds to product hydrocarbon compounds of lower molecular weight than the feedstock hydrocarbon compounds. The process comprises contacting the feedstock at conversion conditions with an improved catalyst composition comprising a novel porous crystalline composition of matter, named MCM-58.

More particularly, the invention provides a hydrocarbon cracking process which uses the improved catalyst composition comprising MCM-58.

In catalytic cracking, high molecular weight hydrocarbons are converted to lower molecular weight hydrocarbons of suitable volatility to permit their use as liquid fuels. The combustion characteristics of gasoline are assessed empirically by assigning the fuel an octane rating. This is generally defined as a comparison with a primary reference which is the percentage of iso-octane (2,2,4-trimethylpentane) in an n-heptane/iso-octane mixture to which the gasoline under examination is equivalent in terms of combustion behavior when considering the octane ratings of n-heptane and iso-octane to be zero and 100 respectively. Both RON and MON can be tested on the same single-cylinder, four-stroke engine of standardized design. RON signifies the research octane number, MON signifies the motor octane number, and the terms are used to describe the knocking characteristics of gasoline, that is, its combustion behavior. For a measurement of RON, the engine speed used is 600 rpm which yields results comparable to an automobile engine operated at low speed. For a measurement of MON, the engine speed is 900 rpm which approximates higher speed cruising conditions. Generally, higher octane numbers are found by the research method compared to the motor method for the same gasoline sample. The average of the RON and MON, known as the road octane number, gives an indication of typical performance in an engine. The higher the octane, the better the combustion behavior in a spark-ignition engine. It has been found that road octane number correlates much more closely to the motor octane number than the research octane. Generally, aromatics and branched paraffinic and olefinic hydrocarbons have higher octane values than acyclic or linear paraffinic hydrocarbons.

In conjunction with catalytic cracking to produce gasoline product, alkylate and potential alkylate may result from the cracking process. This indirectly leads to product of increased octane because high octane, highly branched paraffinic gasoline blending stocks are produced principally by alkylation of C₃ and C₄ olefins with isobutane. Unlike cracking, alkylation makes larger branched hydrocarbons from smaller hydrocarbons and these larger branched hydrocarbons are inherently higher in octane.

The present process provides not only a high octane product, but significantly more light olefins, especially propylene and/or butylene. The lower olefins of this product are high quality, petrochemical grade, and may be used for manufacture of valuable ethers and/or alcohols, or as alkylating agents.

### Feeds

The feedstock, that is, the hydrocarbons to be cracked, may include in whole or in part, a gas oil (e.g., light, medium, or heavy gas oil) having an initial boiling point above about 204°C, a 50 % point of at least about 260°C, and an end point of at least about 315°C. The feedstock may also include deep cut gas oil, vacuum gas oil, thermal oil, residual oil, cycle stock, whole top crude, tar sand oil, shale oil, synthetic fuel, heavy hydrocarbon fractions derived from the destructive hydrogenation of coal, tar, pitches, asphalts, hydrotreated feedstocks derived from any of the foregoing, and the like. As will be recognized, the distillation of higher boiling petroleum fractions above about 400°C must be carried out under vacuum in order to avoid thermal cracking. The boiling temperatures utilized herein are expressed in terms of convenience of the boiling point corrected to atmospheric pressure. Resids or deeper cut gas oils having an end point of up to about 700°C, even with high metals contents, can also be cracked using the invention.

### Process

The present invention provides a process for converting feedstock hydrocarbon compounds to product hydrocarbon compounds of lower molecular weight than the feedstock hydrocarbon compounds. In particular, the present invention provides a process for catalytically cracking a hydrocarbon feed to a mixture of products comprising gasoline, alkylate, potential alkylate, and lower olefins, e.g. propylene, in the presence of a cracking catalyst under catalytic cracking conditions. Catalytic cracking units which are amenable to the process of the invention operate at temperatures from about 400°C to about 650°C, usually from about 450°C to about 600°C, and under reduced, atmospheric, or superatmospheric pressure, usually from about atmospheric to about 5 atmospheres. The catalytic process can be either fixed bed, moving bed, transfer line, or fluidized bed, and the hydrocarbon flow may be either concurrent or countercurrent to the catalyst flow. The process of the invention is particularly applicable to the Fluid Catalytic Cracking (FCC) or Thermofor catalytic Cracking (TCC) processes. In both of these processes, the hydrocarbon feed and catalyst are passed through a reactor and the catalyst is regenerated. The two processes differ substantially in the size of the catalyst particles and in the engineering contact and transfer which is at least partially a function of catalyst size.

The TCC process is a moving bed and the catalyst is in the shape of pellets or beads having an average particle size of about one-sixty-fourth to one-fourth inch. Active, hot catalyst beads progress downwardly cocurrent with a hydrocarbon charge stock through a cracking reaction zone. The hydrocarbon products are separated from the coked catalyst and recovered, and the catalyst is recovered at the lower end of the zone and regenerated.

Typically preferred TCC conversion conditions include an average reactor temperature of from about 450°C to about 540°C; catalyst/oil volume ratio of from about about 2 to about 7; reactor volume hourly space velocity of from about about 1 to about 5 vol./hr./vol.; and recycle to fresh feed ratio of from 0 to about 0.5 (volume).

The process of the invention is particularly applicable to Fluid Catalytic Cracking. In fluidized catalytic cracking processes, the catalyst is a fine powder of about 10 to 200 microns. This powder is generally suspended in the feed and propelled upward in a reaction zone. A relatively heavy hydrocarbon feedstock, e.g., a gas oil, is admixed with a suitable cracking catalyst to provide a fluidized suspension and cracked in an elongated reactor, or riser, at elevated temperatures to provide a mixture of lighter hydrocarbon products. The gaseous reaction products and spent catalyst are discharged from the riser into a separator, e.g., a cyclone unit, located within the upper section of an enclosed stripping vessel, or stripper, with the reaction products being conveyed to a product recovery zone and the spent catalyst entering a dense catalyst bed within the lower section of the stripper. In order to remove entrained hydrocarbons from the spent catalyst prior to conveying the latter to a catalyst regenerator unit, an inert stripping gas, e.g., steam, is passed through the catalyst bed where it desorbs such hydrocarbons conveying them to the product recovery zone. The fluidizable catalyst is continuously circulated between the riser and the regenerator and serves to transfer heat from the latter to the former thereby supplying the thermal needs of the cracking reaction which is endothermic.

Gas from the FCC main-column overhead receiver is compressed and directed with primary-absorber bottoms and stripper overhead gas through a cooler to the high pressure receiver. Gas from this receiver is routed to the primary absorber, where it is contacted by the unstabilized gasoline from the main-column overhead receiver. The net effect of this contacting is a separation between C₃+ and C₂- fractions in the feed to the primary absorber. Primary absorber off-gas is directed to a secondary or sponge absorber, where a circulating stream of light cycle oil from the main column is used to absorb most of the remaining C₅+ material in the sponge absorber feed. Some C₃ and C₄ materials are also absorbed. The sponge-absorber rich oil is returned to the FCC main column. The sponge-absorber overhead, with most of the valuable C₄+ material removed but including H₂S, is sent to the fuel gas or other process streams.

Liquid from the high pressure separator is sent to a stripper where most of the C₂- is removed overhead and sent back to the high pressure separator. The bottoms liquid from the stripper is sent to the debutanizer, where an olefinic C₃-C₄ product is further separated for gasoline production. The debutanizer bottoms, that is, the stabilized gasoline, is sent to treating, if necessary, and then to storage. The C₃ and C₄ product olefins can be directed to an alkylation unit to produce a high octane gasoline by the reaction of an iso-paraffin (usually isobutane) with one or more of the low molecular weight olefins (usually propylene and butylene).

The FCC conversion conditions include a riser top temperature of from about 500°C to about 595°C, preferably from about 520°C to about 565°C, and most preferably from about 530°C to about 550°C; catalyst/oil weight ratio of from about 3 to about 12, preferably from about 4 to about 11, and most preferably from about 5 to about 10; and catalyst residence time of from about 0.5 to about 15 seconds, preferably from about 1 to about 10 seconds.

### Catalyst

The crystalline MCM-58 material for use herein as catalyst component has a composition comprising the molar relationship:

X₂O₃:(n)YO₂,

wherein X is a trivalent element, such as aluminum, boron, iron, indium, and/or gallium, preferably aluminum; Y is a tetravalent element such as silicon, tin, and/or germanium, preferably silicon? and n is from greater than about 10 to about 1000, usually from greater than about 10 to about 400, more usually from about 20 to about 200. In the as-synthesized form, the material has a formula, on an anhydrous basis and in terms of moles of oxides per n moles of YO₂, as follows:

(0.1-2)M₂O:(0.2-2)R:X₂O₃:nYO₂

wherein M is an alkali or alkaline earth metal, and R is an organic moiety. The M and R components are associated with the material as a result of their presence during crystallization, and are easily removed by post-crystallization methods hereinafter more particularly described.

The MCM-58 for use in the invention is thermally stable and in the calcined form exhibits significant hydrocarbon sorption capacity. To the extent desired, the original sodium and/or potassium cations of the as-synthesized material can be replaced in accordance with techniques well known in the art, at least in part, by ion exchange with other cations. Preferred replacing cations include metal ions, hydrogen ions, hydrogen precursor, e.g., ammonium, ions and mixtures thereof. Particularly preferred cations are those which tailor the catalytic activity for certain hydrocarbon conversion reactions. These include hydrogen, rare earth metals and metals of Groups IIA, IIIA, IVA, IB, IIB, IIIB, IVB and VIII of the Periodic Table of the Elements.

In the as-synthesized form, the crystalline MCM-58 material for use in the invention appears to be a single crystalline phase. It can be prepared in essentially pure form with little or no detectable impurity crystal phases and has an X-ray diffraction pattern which is distinguished from the patterns of other known as-synthesized or thermally treated crystalline materials by the lines listed in Table I below:

**TABLE I**

| Interplanar d-Spacing (A) 100 | Relative Intensity, I/Io x |
|---|---|
| 10.89 ± 0.30 | s-vs |
| 9.19 ± 0.30 | vw |
| 6.55 ± 0.29 | vw-w |
| 5.86 ± 0.28 | vw-w |
| 5.57 ± 0.27 | vw-w |
| 5.43 ± 0.26 | vw-w |
| 4.68 ± 0.25 | vw-m |
| 4.36 ± 0.25 | w-vs |
| 4.17 ± 0.23 | vw-m |
| 4.12 ± 0.23 | vw-s |
| 3.78 ± 0.20 | wv-s |
| 3.61 ± 0.15 | vw-w |
| 3.54 ± 0.15 | vw |
| 3.44 ± 0.15 | vw-m |
| 3.37 ± 0.15 | vw-m |
| 3.06 ± 0.15 | vw-w |
| 2.84 ± 0.15 | vw |
| 2.72 ± 0.13 | vw |
| 2.66 ± 0.12 | vw |
| 2.46 ± 0.12 | vw |
| 2.17 ± 0.10 | vw |

These X-ray diffraction data were collected with a Scintag diffraction system, equipped with a germanium solid state detector, using copper K-alpha radiation. The diffraction data were recorded by step-scanning at 0.02 degrees of two-theta, where theta is the Bragg angle, and a counting time of 10 seconds for each step. The interplanar spacings, d's, were calculated in Angstrom units (A), and the relative intensities of the lines, I/Iₒ is one-hundredth of the intensity of the strongest line, above background, were derived with the use of a profile fitting routine (or second derivative algorithm). The intensities are uncorrected for Lorentz and polarization effects. The relative intensities are given in terms of the symbols vs = very strong (80-100),
s = strong (60-80), m = medium (40-60), w = weak (20-40), and vw = very weak (0-20). It should be understood that diffraction data listed for this sample as single lines may consist of multiple overlapping lines which under certain conditions, such as differences in crystallographic changes, may appear as resolved or partially resolved lines. Typically, crystallographic changes can include minor changes in unit cell parameters and/or a change in crystal symmetry, without a change in the structure. These minor effects, including changes in relative intensities, can also occur as a result of differences in cation content, framework composition, nature and degree of pore filling, and thermal and/or hydrothermal history.

When used as a catalyst, the MCM-58 may be subjected to treatment to remove part or all of any organic constituent. The crystalline material can also be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be in the composition by way of cocrystallization, exchanged into the composition to the extent a Group IIIA element, e.g., aluminum, is in the structure, impregnated therein or intimately physically admixed therewith. Such component can be impregnated in or on to it such as, for example, by, in the case of platinum, treating the silicate with a solution containing a platinum metal-containing ion. Thus, suitable platinum compounds for this purpose include chloroplatinic acid, platinous chloride and various compounds containing the platinum amine complex.

The crystalline MCM-58 material can be transformed by thermal treatment. This thermal treatment is generally performed by heating at a temperature of at least about 370°C for at least 1 minute and generally not longer than 20 hours. While subatmospheric pressure can be employed for the thermal treatment, atmospheric pressure is desired for reasons of convenience. The thermal treatment can be performed at a temperature up to about 925°C. The thermally treated product, especially in its metal, hydrogen and ammonium forms, is particularly useful in the catalysis of certain organic, e.g., hydrocarbon, conversion reactions.

As a catalyst component in the present conversion process, MCM-58 should be dehydrated, at least partially. This can be done by heating to a temperature in the range of 200°C to about 370°C in an atmosphere such as air, nitrogen, etc., and at atmospheric, subatmospheric or superatmospheric pressures for between 30 minutes and 48 hours. Dehydration can also be performed at room temperature merely by placing the MCM-58 in a vacuum, but a longer time is required to obtain a sufficient amount of dehydration.

MCM-58 can be prepared from a reaction mixture containing sources of alkali or alkaline earth metal (M), e.g., sodium and/or potassium, cation, an oxide of trivalent element X, e.g., aluminum and/or boron, an oxide of tetravalent element Y, e.g., silicon, directing agent (R), and water, said reaction mixture having a composition, in terms of mole ratios of oxides, within the following ranges:

| Reactants | Useful | Preferred |
|---|---|---|
| YO₂/X₂O₃ | 15 to 1000 | 25 to 500 |
| H₂O/YO₂ | 5 to 200 | 20 to 100 |
| OH⁻/YO₂ | 0 to 3 | 0.10 to 0.50 |
| M/YO₂ | 0 to 3 | 0.10 to 2 |
| R/YO₂ | 0.02 to 1.0 | 0.10 to 0.50 |

In this synthesis method, the preferred source of YO₂ comprises predominately solid YO₂, for example at least about 30 wt.% solid YO₂. Where YO₂ is silica, the use of a silica source containing at least about 30 wt.% solid silica, e.g., Ultrasil (a precipitated, spray dried silica containing about 90 wt.% silica) or HiSil (a precipitated hydrated SiO₂ containing about 87 wt.% silica, about 6 wt.% free H₂O and about 4.5 wt.% bound H₂O of hydration and having a particle size of about 0.02 micron) is preferred for MCM-58 formation from the above mixture. Preferably, therefore, the YO₂, e.g., silica, source contains at least about 30 wt.% solid YO₂, e.g., silica, and more preferably at least about 40 wt.% solid YO₂, e.g., silica.

The organic directing agent R for use herein above is either the cation benzylquinuclidinium, having a formula C₁₄H₂₀N⁺ or the cation benzyltropanium, having a formula C₁₅H₂₂N⁺, and may be represented as follows:

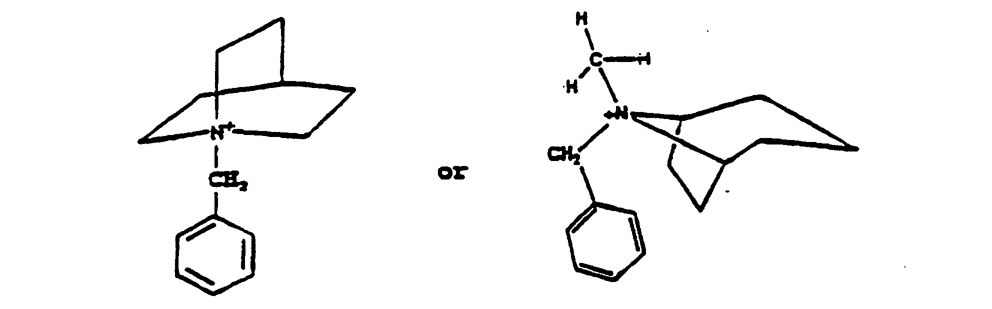

The sources of these organic cations may be, for example, the halide, e.g., chloride or bromide, or hydroxide salt. The source of organic directing agents used in the following examples was synthesized as follows:
(1) Benzylquinuclidinium halide, i.e., bromide, was synthesized by reacting benzylbromide and quinuclidine in absolute ethanol solvent in a flask equipped with a reflux condenser, a thermometer and a stirrer. The flask was charged with 60.0 grams of benzylbromide with 200 ml of absolute ethanol. Then 33.4 grams of quinuclidine dissolved in 300 ml of absolute ethanol was transferred to the flask. Heating and stirring of the flask reaction mixture commenced immediately.
   The reaction mixture was refluxed (-70°C) overnight with stirring before quenching the reaction vessel in a dry ice-acetone bath to -40°C. The cold crystalline product was separated from the solvent, filtered, and washed with anhydrous diethylether on a Büchner funnel. The crystals were dried in an air stream, then chemically analyzed. The benzylquinuclidium bromide product of this example was found to be composed of 56.13 wt.% C, 7.46 wt.% H, 4.66 wt.% N and 28.13 wt.% Br;
(2) Benzyltropanium halide, i.e., bromide, was synthesized by reacting benzylbromide and tropane in absolute ethanol solvent in a flask equipped with a reflux condenser, a thermometer and a stirrer. The flask was charged with 60.0 grams of benzylbromide with 300 ml of absolute ethanol. Then 37.6 grams of tropane dissolved in 300 ml of absolute ethanol was transferred to the flask. Heating and stirring of the flask reaction mixture commenced immediately.

The reaction mixture was refluxed (-70°C) overnight with stirring before quenching the reaction vessel in a dry ice-acetone bath to -40°C. The cold crystalline product was separated from the solvent, filtered, and washed with anhydrous diethylether on a Büchner funnel. The benzyltropanium bromide product crystals were then dried in an air stream.

Crystallization of the MCM-58 can be carried out at either static or stirred conditions in a suitable reactor vessel, such as for example, polypropylene jars or teflon lined or stainless steel autoclaves. The total useful range of temperatures for crystallization is from about 80°C to about 250°C for a time sufficient for crystallization to occur at the temperature used, e.g., from about 12 hours to about 100 days. Thereafter, the crystals are separated from the liquid and recovered.

It should be realized that the reaction mixture components can be supplied by more than one source. The reaction mixture can be prepared either batchwise or continuously. Crystal size and crystallization time of the new crystalline material will vary with the nature of the reaction mixture employed and the crystallization conditions.

Synthesis of MCM-58 crystals may be facilitated by the presence of at least 0.01 percent, preferably 0.10 percent and still more preferably 1 percent, seed crystals (based on total weight) of crystalline product.

The MCM-58 crystals can be shaped into a wide variety of particle sizes for use herein. Generally speaking, the particles can be in the form of a powder, a granule, or a molded product, such as an extrudate having particle size sufficient to pass through a 2 mesh (Tyler) screen and be retained on a 400 mesh (Tyler) screen. In cases where the catalyst is molded, such as by extrusion, the crystals can be extruded before drying or partially dried and then extruded.

The catalyst composition for use herein will comprise
(1) MCM-58 alone as the active component, or (2) a mixture of MCM-58 with another zeolite molecular sieve, or (3) the MCM-58 may be used as an additive catalyst to a large-pore molecular sieve catalyst composition found in cracking catalyst inventory.
   The other zeolite component of catalyst composition
(2) above may be a large-pore crystalline material having pore openings of greater than about 7 Angstroms diameter such as, for example, zeolite X (U.S. Patent 2,882,442); REX; zeolite Y (U.S. Patent 3,130,007); Ultrastable Y (USY) (U.S. Patent 3,449,070); Rare Earth exchanged Y (REY) (U.S. Patent 4,415,438); Rare Earth exchanged USY (REUSY); Dealuminated Y (DeAl Y) (U.S. Patents 3,442,792 and 4,331,694); Ultrahydrophobic Y (UHPY) (U.S. Patent 4,401,556); and/or dealuminated silicon-enriched zeolites, e.g., LZ-210 (U.S. Patent 4,678,765); ZSM-20 (U.S. Patent 3,972,983); Beta (U.S. Patent 3,308,069); L (U.S. Patents 3,216,789 and 4,701,315); silicoaluminophosphates SAPO-5; SAPO-37; SAPO-40; MCM-9; metalloaluminophosphate MAPO-36; aluminophosphate VPI-5; or mesoporous crystalline material MCM-41; or an intermediate pore crystalline material having pore openings of from about 4 Angstroms to about 7 Angstroms diameter such as, for example, zeolites ZSM-5; ZSM-11; ZSM-22; ZSM-23; ZSM-35; ZSM-48; ZSM-57; or silicoaluminophosphate SAPO-31; or small pore zeolite having pore openings of less than about 4 Angstroms diameter including, for example, erionite and ZSM-34. This other zeolite component may be a mixture of large-pore, intermediate-pore, and/or small-pore crystalline materials. A non-limiting example of this includes the combination of zeolite having the structure of ZSM-5 having a SiO₂/Al₂O₃ mole ratio of greater than about 20/l, e.g., about 55/l, and zeolite selected from the group consisting of USY, REY, and REUSY.

The large-pore molecular sieves for use herein when combined with MCH-58 or to which is added MCM-58 as an additive catalyst, i.e., catalyst composition (3) above, may comprise any active component which has cracking activity and which has a pore opening of greater than about 7 Angstroms in effective diameter. The active component may be a conventional large-pore molecular sieve including zeolite X; REX; zeolite Y; Ultrastable Y (USY); Rare Earth exchanged Y (REY); Rare Earth exchanged USY (REUSY); Dealuminated Y (DeAl Y); Ultrahydrophobic Y (UHPY); and/or dealuminated silicon-enriched zeolites, e.g., LZ-210. Preferred are higher silica forms of zeolite Y. ZSM-20; zeolite Beta; zeolite L; and naturally occurring zeolites such as faujasite, mordenite and the like may also be used. These materials may be subjected to conventional treatments, such as impregnation or ion exchange with rare earths to increase stability. In current commercial practice most cracking catalysts contain these large-pore molecular sieves. The preferred molecular sieve of those listed above is a zeolite Y, more preferably an REY, USY or REUSY.

Other large-pore crystalline molecular sieves include pillared silicates and/or clays; aluminophosphates, e.g., ALPO₄-5, ALPO₄-8, VPI-5; silicoaluminophosphates, e.g., SAPO-5, SAPO-37, SAPO-40, MCM-9; and other metal aluminophosphates. Mesoporous crystalline material for use as the molecular sieve includes MCM-41. These are variously described in U.S. Patents 4,310,440; 4,440,871; 4,554,143; 4,567,029; 4,666,875; 4,742,033; 4,880,611; 4,859,314; 4,791,083; 5,102,643; and 5,098,684, each incorporated herein by reference.

The preparation of some molecular sieve-containing catalysts may require reduction of the sodium content, as well as conversion to the acid (protonated) form. For example, with zeolites this can be accomplished by employing the procedure of converting the zeolite to an intermediate ammonium form as a result of ammonium ion exchange followed by calcination to provide the hydrogen form. The operational requirements of these procedures are well known in the art.

The source of the ammonium ion is not critical; thus the source can be ammonium hydroxide or an ammonium salt such as ammonium nitrate, ammonium sulfate, ammonium chloride and mixtures thereof. These reagents are usually in aqueous solutions. By way of illustration, aqueous solutions of 1N NH₄OH, 1N NH₄NO₃, 1N NH₄Cl, and 1N NH₄Cl/NH₄OH have been used to effect ammonium ion exchange. The pH of the ion exchange is not critical but is generally maintained at 7 to 12. Ammonium exchange may be conducted for a period of time ranging from about 0.5 to about 20 hours at a temperature ranging from ambient up to about 100°C. The ion exchange may be conducted in a single stage or in multiple stages. Calcination of the ammonium exchanged zeolite will produce its acid form. Calcination can be effected at temperatures up to about 550°C.

The MCM-58, other zeolite molecular sieve, or large-pore molecular sieve catalyst component may include phosphorus or a phosphorus compound for any of the functions generally attributed thereto, such as, for example, attrition resistance, stability, metals passivation, and coke make reduction.

Suitable sources of phosphorus for use in preparing the catalyst composition and/or additive catalyst used in the present invention include phosphoric acid, ammonium dihydrogen phosphate, ammonium monohydrogen phosphate, triammonium phosphate, ammonium hypophosphate, ammonium orthophosphate, ammonium dihydrogen orthophosphate, ammonium monohydrogen orthophosphate, ammonium hypophosphite, ammonium dihydrogen orthophosphite, and mixtures thereof.

To prepare the other zeolite molecular sieve or the large-pore molecular sieve component for use herein, a slurry may be formed by deagglomerating the molecular sieve, preferably in an aqueous solution. A slurry of the matrix material may be formed by mixing the desired matrix components such as clay and/or inorganic oxide in an aqueous solution. The molecular sieve slurry and the matrix slurry are then well mixed and spray dried to form catalyst particles of, for example, less than 200 microns in diameter.

It is noted that additive catalyst with different properties is often used along with the conventional catalyst to form an optional mixed catalyst system. Commercially used additives are shape-selective zeolites. Zeolites having a Constraint Index of 1-12 can be used for this purpose. Details of the Constraint Index test are provided in J.Catalysis, 67, 218-222 (1981) and in U.S. Patent 4,711,710.

Conventional shape-selective zeolites useful for this purpose are exemplified by large-pore (e.g., greater than about 7 Angstroms pore size) zeolite Beta (U.S. Patent 3,308,069); intermediate pore (e.g., pore size of from about 4 to about 7 Angstroms) zeolites ZSM-5 (U.S. Patent 3,702,886 and Re. 29,948); ZSM-11 (U.S. Patent 3,709,979); ZSM-12 (U.S. Patent 4,832,449); ZSM-22 (U.S. Patent 4,556,477); ZSM-23 (U.S. Patent 4,076,842); ZSM-35 (U.S. Patent 4,016,245); ZSM-48 (U.S. Patent 4,397,827); ZSM-57 (U.S. Patent 4,046,685); PSH-3 (U.S.Patent 4,439,409); and MCM-22 (U.S. Patent 4,954,325); and small pore (e.g., having pore openings of less than about 4 Angstroms diameter) zeolites ZSM-34 and erionite, either alone or in combination. In addition, the catalyst composition may include metals useful in promoting the oxidation of carbon monoxide to carbon dioxide under regenerator conditions as described in U.S. Patent 4,350,614. The additive catalyst may also include phosphorus or a phosphorus compound for any of the functions generally attributed thereto.

The matrix, i.e., binder, materials used for the catalyst composition are resistant to the temperatures and other conditions e.g., mechanical attrition, which occur in various hydrocarbon conversion processes such as cracking. It is generally necessary that the catalysts be resistant to mechanical attrition, that is, the formation of fines which are small particles, e.g., less than 20 µm. The cycles of cracking and regeneration at high flow rates and temperatures, such as in an FCC process, have a tendency to break down the catalyst into fines, as compared with an average diameter of catalyst particles of about 60-100 microns. In an FCC process, catalyst particles range from about 20 to about 200 microns, preferably from about 20 to 120 microns. Excessive generation of catalyst fines increases the refiner's catalyst costs.

The matrix may fulfill both physical and catalytic functions. Matrix materials include active or inactive inorganic materials such as clays, and/or metal oxides such as alumina or silica, titania, zirconia, or magnesia. The metal oxides may be in the form of a gelatinous precipitate or gel.

Use of an active matrix material in conjunction with the molecular sieve component that is combined therewith, may enhance the conversion and/or selectivity of the overall catalyst composition in certain hydrocarbon conversion processes. Inactive materials may serve as diluents to control the amount of conversion in a given process so that products can be obtained economically and in an orderly fashion without employing other means for controlling the rate of reaction. These materials may be incorporated as naturally occurring clays to improve the attrition resistance of the catalyst under commercial operating conditions.

Naturally occurring clays which can be composited with the catalyst include the montmorillonite and kaolin families which include the subbentonites, and the kaolins commonly known as Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, catalysts can be composited with a porous matrix material such as silica-alumina, silica-magnesia, silica-zirconia, silica-thoria, silica-beryllia, silica-titania, as well as ternary materials such as silica-alumina-thoria, silica-alumina-zirconia, silica-alumina-magnesia, silica-magnesia-zirconia. The matrix can be in the form of a cogel. A mixture of these components can also be used.

In general, the relative proportions of finely divided, crystalline molecular sieve component and inorganic oxide gel matrix vary widely, with the molecular sieve content ranging from about 1 to about 90 percent by weight, and more usually from about 2 to about 80 weight percent of the composite.

When the MCM-58 is mixed with another zeolite molecular sieve or when the MCM-58 is used as an additive to large-pore molecular sieve cracking catalyst inventory, the other molecular sieve or the large-pore molecular sieve component may comprise from about 5 to about 60 weight percent of the overall catalyst composition. The additive catalyst component may comprise from about 0.5 to about 50, for example, from about 2 to about 50, weight percent of the catalyst composition. For the additive catalyst, the crystals having the structure of MCM-58 may comprise from at least about 15 to less than about 60 weight percent of the additive catalyst component composition.

Although neither the cracking catalyst nor the additive catalyst need be steamed prior to use in the present process, they may be steamed at a temperature of from about 300°C to about 800°C for a time of from about 1 to about 200 hours in about 5 to about 100 % steam.

In an embodiment of the present invention, the catalyst composition may include metals useful in promoting the oxidation of carbon monoxide to carbon dioxide under catalyst regeneration conditions as described in U.S. Patents 4,072,600 and 4,350,614. Examples of this embodiment include addition to the catalyst composition for use herein trace amounts of oxidation promoter selected from the group consisting of platinum, palladium, iridium, osmium, rhodium, ruthenium, rhenium, and combination thereof. The catalyst composition may comprise, for example, from about 0.01 ppm to about 100 ppm by weight oxidation promoter, usually from about 0.01 ppm to about 50 ppm by weight, preferably from about 0.01 ppm to about 5 ppm by weight.

In order to more fully illustrate the nature of the invention and the manner of practicing same, the following examples are presented.

When Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of silica-alumina cracking catalyst taken as an Alpha of 1 (Rate Constant = 0.016 sec⁻¹). The Alpha Test is described in U.S. Patent 3,354,078; in the Journal of Catalysis, 4, 527 (1965); 6, 278 (1966); and 61, 395 (1980). The experimental conditions of the test used herein include a constant temperature of 538°C and a variable flow rate as described in detail in the Journal of Catalysis, 61, 395.

### EXAMPLES 1-4

Experiments were conducted for synthesis of crystalline product material. In these experiments, Al₂(SO₄)₃ • 18H₂O and KOH pellets were dissolved in deionized water. The benzylquinuclidinium bromide prepared as above was then dissolved in the solutions for Examples 1, 2, and 3. Benzyltropanium bromide prepared as above was dissolved in the solution for Example 4. Colloidal silica sol (30 wt.% SiO₂) was then mixed into the solutions. The mixtures were stirred for 2 minutes to produce uniform, fluid hydrogels having compositions SiO₂/Al₂O₃ = 30, H₂O/SiO₂ = 40, OH⁻/SiO₂ = 0.30, K⁺/SiO₂ = 0.57, and R/SiO₂ = 0.20, where R is the cation of benzylquinuclidinium bromide or benzyltropanium bromide (Example 4).

The hydrogels of each experiment were then transferred to a 300 ml stainless steel autoclave equipped with a stirrer. The autoclave was capped and sealed; and 2758 kPa (400 psig) of inert gas was introduced into the autoclave. Stirring and heating were started immediately. Crystallizations were carried out at 170°C with stirring (2 days for Example 1 and 7 days for Examples 2-4).

Crystalline products were recovered, filtered, washed with deionized water, and dried on a filter funnel in an air stream under an infrared lamp. The dried crystalline powder products were proven to be MCM-58 by X-ray diffraction.

### EXAMPLES 5-8

MCM-58 products of Examples 1, 2, 3, and 4 were weighed into quartz boats, then placed into a Heviduty® tube furnace and sealed with nitrogen gas flowing through the furnace tube. The heating of the furnace was begun at 2°C/minute from room temperature to 538°C. When the furnace reached the maximum temperature, the flowing gas was switched to air, and the calcination of the zeolite was continued for 15 hours before termination.

The air calcined samples were ammonium exchanged with 1 M NH₄NO₃ at 80°C for 6 hours. After ammonium exchange, the zeolites were filtered, washed with deionized water, and dried in an air stream on the filter funnel under an infrared heat lamp.

The calcination procedure was repeated on the ammonium-exchanged materials in the tube furnace in the same manner as described above, except this time the samples were held at 538°C for 8 hours to convert them to HMCM-58. Examples 5, 6, 7, and 8 products were MCM-58 materials from the products of Examples 1, 2, 3, and 4, respectively.

### EXAMPLE 9

Samples of the HMCM-58 products of Examples 5, 6, and 7 were tested for catalytic cracking activity in the Alpha Test and found to have Alpha Values of 521, 164, and 510, respectively.

### Constraint Index

A convenient measure of the extent to which a crystalline material provides control to molecules of varying sizes to its internal structure is the Constraint Index (CI) of the material. Zeolites which provide a highly restricted access to and egress from their internal structures have a high value for the Constraint Index, and zeolites of this kind usually have pores of small size, e.g., less than 5 Angstroms. On the other hand, zeolites which provide relatively free access to their internal structures have a low value for the Constraint Index and usually have pores of large size, e.g., greater than 8 Angstroms. The method by which Constraint Index is determined is described fully in U.S. Patent No. 4,016,218.

### EXAMPLE 10

The Constraint Index of the HMCM-58 product of Example 6 was determined to be 0.3 at 316°C. This value falls within the classification of the more open structures having 12-membered rings. Hence, it is concluded from the catalytic Constraint Index Test result that HMCM-58 contains at least a 12-membered ring structure.

### EXAMPLE 11

Catalyst "A" containing 40% HMCM-5B, prepared as in Example 6, in a silica-alumina-clay matrix was produced by spray drying according to the following procedure.

Thirty grams of alumina (Condea) were slurried in distilled water and peptized with formic acid. The resulting gel was added to 596 grams of colloidal silica (Nalco 1034A) and mixed for 3 minutes. A 300 gram quantity of ball milled HMCM-58 was added to the silica-alumina slurry. A 372 gram quantity of Kaolin clay (Thiele RC-30) was added to the slurry while maintaining the pH between 3 and 4. The slurry was spray dried with an outlet temperature of 177°C (350°F). The spray-dried product was then calcined for 2 hours at 538°C (1000°F).

The resulting Catalyst A comprised 40% HMCM-58 and 60% matrix (45.5% silica, 4.5% alumina, and 50% clay).

### EXAMPLE 12

Catalyst A was tested using a Fixed Fluid Bed (FFB) reactor with sour heavy gas oil having the properties of Table II with catalyst to oil ratio of 3. Reaction conditions included a temperature of 515°C (960°F), a pressure of 29.66 inches of Hg, and 1 minute time on stream. The results of this test presented in Table III show that MCM-58 is an active catalyst for the present process.

**TABLE II**

| | |
|---|---|
| API Gravity, 60°F (15°C) | 20.1 |
| Pour Point | 95 |
| KV @ 40°C, cs | 104.8 |
| KV @ 100°C, cs | 7.95 |
| Aniline Point | 168.5 |
| Bromine Number | 6.9 |
| CCR, vt.% | 0.56 |
| Sulfur, wt.% | 2.6 |
| Carbon, wt.% | 85.1 |
| Hydrogen, wt.% | 12.3 |
| Nitrogen, wt.% | 0.16 |
| Basic Nitrogen, ppm | 465 |
| Nickel, ppm | 0.48 |
| Vanadium, ppm | 0.29 |
| Iron, ppm | 1.2 |
| Copper, ppm | 0.01 |
| Na, ppm | 0.8 |
| | |
| Paraffins, wt.% | 17.9 |
| Mono Naphthenes, wt.% | 13.5 |
| Poly Naphthenes, wt.% | 13.3 |
| Aromatics | 55.3 |
| | |

| Distillation Boiling Range | °F |
|---|---|
| IBP | 497 |
| 5 vol.% | 633 |
| 10 vol.% | 677 |
| 20 vol.% | 726 |
| 30 vol.% | 760 |
| 40 vol.% | 792 |
| 50 vol.% | 826 |
| 60 vol.% | 859 |
| 70 vol. % | 899 |
| 80 vol.% | 945 |
| 90 vol.% | 1001 |
| EP | 1024 |

**TABLE III**

| | |
|---|---|
| Cat/oil | 3 |
| Conversion, % vol. | 66 |
| C₅⁺ gasoline, % vol. | 31 |
| Alkylate, % vol. | 29 |
| C₃=, % vol. | 12 |
| C₄=, % vol. | 5 |
| Gasoline + alkylate, % vol. | 60 |
| Light gas, % wt. | 3.0 |
| Coke, % wt. | 8 |
| LFO, % wt. | 22 |
| HFO, % wt. | 15 |

### EXAMPLE 13

Catalyst "B" was prepared by steaming Catalyst A at 649°C (1200°F) for 4 hours using 45% steam and 55% air. Table IV shows the results of our FFB test on this catalyst which shows improved selectivity as the acid site density decreases. Coke has dropped and gasoline plus alkylate product increased slightly even at lower conversion.

**TABLE IV**

| | |
|---|---|
| cat/oil | 3 |
| Conversion, % vol. | 57 |
| C₅⁺ gasoline, % vol. | 32 |
| Alkylate, % vol. | 29 |
| Gasoline + alkylate, % vol. | 61 |
| Coke, % wt. | 4 |
| LPO, % wt. | 24 |
| HFO, % wt. | 23 |

### EXAMPLE 14

Catalyst "C" was prepared by steaming Catalyst B at 760°C (1400°F) for 4 hours using 45% steam and 55% air. Table V shows the results of our FFB test on this catalyst and compares it with a 40% USY catalyst in a similar matrix and steamed for 10 hours at 1450°F in 45% steam.

**TABLE V**

| | Catalyst C | USY |
|---|---|---|
| Conversion, % vol. | 65% | 65% |
| C₅⁺ gasoline, % vol. | 36.8 | 53.6 |
| C₃=, % vol. | 13.1 | 5.7 |
| | | |
| C₄=, % vol. | 9.9 | 6.0 |
| Alkylate, % vol. | 38.2 | 19.6 |
| Gasoline + alkylate, % vol. | 75.0 | 73.3 |
| | | |
| Coke, % wt. | 5.1 | 4.7 |
| LFO, % wt. | 22.7 | 28.9 |
| HFO, % wt. | 15.5 | 8.5 |
| RON, raw gasoline | 95.2 | 89.0 |

The results in Table V show that MCM-58 has good stability after steaming at 760°C (1400°F). Furthermore, the differences between MCM-58 and USY are observed. MCM-58 makes significantly more light olefins, i.e., C₃⁻ and C₄⁻, that, if added to the gasoline, produce a greater amount of gasoline + alkylate. The octane (RON) for the raw gasoline from MCM-58 catalyst is also much greater than that from USY catalyst. This Example shows that MCM-58 is an excellent octane catalyst with good yields for gasoline + alkylate, and high yields of lower molecular weight olefins.

### EXAMPLE 15

catalyst "D" was prepared by steaming catalyst C at 788° (1450°F) for 4 hours using 45% steam and 55% air. Table VI shows the results of our FFB test on this catalyst. This Example shows that MCM-58 has good steam stability.

**TABLE VI**

| | |
|---|---|
| Cat/oil | 5.8 |
| Conversion, % vol. | 57.8 |
| C₅⁺ gasoline, % vol. | 38.5 |
| Alkylate, % vol. | 26.7 |
| Gasoline + alkylate, % vol. | 65.2 |
| Outside iC₄ for alkylate, % vol. | 10.8 |
| | |
| Coke, % wt. | 4.31 |
| RON, raw gasoline | 94.7 |
| RON, C₅⁺ gasoline | 94.4 |
| RON, C₅⁺ gasoline + alkylate | 94.2 |

The gasoline produced during this experiment was submitted for gas chromatographic analysis of gasoline range materials. Table VII shows the composition of the gasoline and compares it with that of a commercial REUSY equilibrium catalyst having the following properties:

| | |
|---|---|
| Silica, wt.% | 54.2 |
| Alumina, wt.% | 34.4 |
| Ash, wt.% | 99.58 |
| Rare Earth, wt.% | 3.0 |
| Sodium, wt.% | 0.32 |
| Surface Area, m²/g | 124 |
| Bulk Density, (Loose) g/cc | 0.85 |
| Bulk Density, (Packed), g/cc | 0.96 |
| Particle Density, g/cc | 1.385 |
| Real Density, g/cc | 2.648 |
| Pore Volume, cc/g | 0.34 |
| Pore Diameter, A | 110 |

**TABLE VII**

| | Catalyst D | REUSY Catalyst |
|---|---|---|
| Hydrocarbon conv., % vol. | 58 | 59 |

| Gasoline composition | | |
|---|---|---|
| Naphthenes, % wt. | 8.3 | 10.9 |
| Iso-paraffins, % wt. | 13.5 | 22.5 |
| N-paraffins, % wt. | 2.3 | 1.7 |
| Cyclic-olefins, % wt. | 13.3 | 6.6 |
| Iso-olefins, % wt. | 18.1 | 13.2 |
| N-olefins, % wt. | 6.5 | 6.9 |
| Aromatics, % wt. | 36.0 | 32.0 |
| >390 of °FC, % wt. | 2.1 | 6.3 |
| | | |
| C₅⁺ gasoline octane | 94.4 | 90.1 |

### EXAMPLE 16

Catalyst "E", made from a mixture of 5% catalyst A with 95% of the commercial REUSY equilibrium catalyst, was used to test MCM-58 as an additive. The results presented in Table VIII show the effect of MCM-58 as an additive catalyst and demonstrate its effectiveness as an octane and gasoline plus alkylate enhancement additive when compared with results obtained for the commercial REUSY catalyst.

**TABLE VIII**

| | Catalyst E | REUSY Catalyst |
|---|---|---|
| Cat/oil | 3 | 3 |
| Conversion, % vol. | 64.5 | 61.2 |
| C₅⁺ gasoline, % vol. | 47.0 | 50.2 |
| Light gas, % wt. | 2.0 | 2.7 |
| Total C₃, % vol. | 13.2 | 8.9 |
| Total C₄, % vol. | 15.7 | 11.1 |
| Coke, % wt. | 3.56 | 3.37 |
| LFO, % wt. | 27.1 | 29.1 |
| HFO, % wt. | 11.3 | 11.9 |
| Gasoline + distillate, % wt. | 66.0 | 70.1 |
| | | |
| Alkylate, % vol. | 28.4 | 20.6 |
| Gasoline + alkylate, % vol. | 75.4 | 70.8 |
| | | |
| Outside iC₄ for alkylate, % vol. | 11.5 | 9.8 |
| | | |
| RON, raw gasoline | 93.8 | 90.2 |
| | | |
| RON, C₅⁺ gasoline | 93.3 | 89.9 |
| | | |
| RON, C₅⁺ gasoline + alkylate | 93.5 | 91.0 |

### EXAMPLE 17

Catalyst "F", a mixture of 25% catalyst D and 75% REUSY equilibrium catalyst, was tested in our FFB unit. Table IX shows that MCM-58 can be used effectively to increase the octane of gasoline range products.

**TABLE IX**

| | Catalyst F | REUSY Catalyst |
|---|---|---|
| Crackability | 2.3 | 2.3 |
| Conversion, % vol. | 70.0 | 70.0 |
| C₅⁺ gasoline, % vol. | 55.0 | 56.4 |
| | | |
| Light gas, % wt. | 2.2 | 2.3 |
| Total C₃, % vol. | 10.6 | 9.9 |
| | | |
| Total C₄, % vol. | 13.3 | 12.3 |
| Coke, % wt. | 4.97 | 4.75 |
| LFO, % vt. | 26.2 | 26.2 |
| HFO, % wt. | 7.1 | 7.0 |
| Gasoline + distillate, % wt. | 71.6 | 72.9 |
| | | |
| Alkylate, % vol. | 22.5 | 20.8 |
| Gasoline + alkylate, % vol. | 77.5 | 77.2 |
| | | |
| Outside iC₄ for a lkylate, % vol. | 8.9 | 8.3 |
| | | |
| RON, raw gasoline | 91.9 | 90.7 |
| | | |
| RON, C₅⁺ gasoline | 91.5 | 90.4 |
| | | |
| RON, C₅⁺ gasoline + alkylate | 92.1 | 91.3 |

## Claims

1. A process for converting feedstock hydrocarbon compounds to product hydrocarbon compounds having a lower molecular weight than the feedstock hydrocarbon compounds which comprises contacting said feedstock at conversion conditions with a catalyst composition comprising an active form of synthetic porous crystalline material **characterized in that** the synthetic porous crystalline material is a novel porous crystalline composition, named MCM-58, which has an X-ray diffraction pattern as follows
| Interplanar d-Spacing (A) 100 | Relative Intensity, I/Io x |
|---|---|
| 10.89 ± 0.30 | s-vs |
| 9.19 ± 0.30 | vw |
| 6.55 ± 0.29 | vw-w |
| 5.86 ± 0.28 | vw-w |
| 5.57 ± 0.27 | vw-w |
| 5.43 ± 0.26 | vw-w |
| 4.68 ± 0.25 | vw-m |
| 4.36 ± 0.25 | w-vs |
| 4.17 ± 0.23 | vw-m |
| 4.12 ± 0.23 | vw-s |
| 3.78 ± 0.20 | wv-s |
| 3.61 ± 0.15 | vw-w |
| 3.54 ± 0.15 | vw |
| 3.44 ± 0.15 | vw-m |
| 3.37 ± 0.15 | vw-m |
| 3.06 ± 0.15 | vw-w |
| 2.84 ± 0.15 | vw |
| 2.72 ± 0.13 | vw |
| 2.66 ± 0.12 | vw |
| 2.46 ± 0.12 | vw |
| 2.17 ± 0.10 | vw |
and has a composition comprising the molar relationship
X₂O₃:(n)YO₂,
wherein n is from greater than 10 to 1000, X is a trivalent element, and Y is a tetravalent element.

2. The process of claim 1 wherein n is from greater than 10 to 400.

3. The process of claim 1 wherein n is from 20 to 200.

4. The process of claim 1, 2 or 3 wherein said crystalline material comprises cations selected from the group consisting of hydrogen, hydrogen precursors, rare earth metals, metals of Groups IIA, IIIA, IVA, IS, IIB, IIIB, IVB, VIB and VIII of the Periodic Table of the Elements, and combinations thereof.

5. The process of claim 1, 2, 3 or 4 wherein X is trivalent boron, iron, indium, gallium, aluminum, or a combination thereof; and Y is tetravalent silicon, tin, germanium, or a combination thereof.

6. The process of claim 5 wherein X comprises aluminum, boron, or a combination thereof and Y comprises silicon.

7. The process of claim 1 wherein said catalyst composition comprises a matrix of alumina, silica, zirconia, titania, magnesia, beryllia, clay, or a combination thereof.

8. The process of claim 1 wherein said catalyst composition comprises phosphorus.

9. The process of claim 1 wherein said conversion conditions include temperature of from 400°C to 650°C and a pressure of from atmospheric to 5 atmospheres.

10. The process of claim 1 wherein said conversion conditions include an average reactor temperature of from 450°C to 540°C, a catalyst/oil volume ratio of from 2 to 7, and a volume hourly space velocity of from 1 to 5 hr⁻¹.

11. The process of claim 1 wherein said conversion conditions include a riser top temperature of from 500°C to 595°C, a catalyst/oil weight ratio of from 3 to 12, and a catalyst residence time of from 0.5 to 15 seconds.

12. The process of claim 1, 4, 7 or 8 wherein said catalyst composition further comprises another molecular sieve component of large-pore crystalline material having pore openings of greater than 7 Angstroms diameter, intermediate-pore crystalline material having pore openings of from 4 Angstroms to 7 Angstroms diameter, small-pore crystalline material having pore openings of less than 4 Angstroms diameter, or combinations thereof.

13. The process of claim 1, 4, 7 or 8 wherein said catalyst composition further comprises a molecular sieve component of the group comprising ZSM-5, ZSM-11, ZSM-22, ZSM-23, ZSM-35, ZSM-48, ZSM-57 or SAPO-31.

14. The process of claim 1, 4, 7 or 8 wherein said catalyst composition further comprises a large-pore molecular sieve component of zeolites X, REX, Y, USY, REY, REUSY, DeAlY, UHPY, LZ-210, Beta, ZSM-20, L, silicoaluminophosphates SAPO-5, SAPO-37, SAPO-40, MCM-9, pillared silicates, pillared clays or mesoporous crystalline MCM-41.

15. The process of claim 14 wherein the large-pore molecular sieve component comprises Y, REY, USY, or REUSY.

16. The process of claim 1, 4, 7, 8 or 12 wherein said feedstock comprises a gas oil having an initial boiling point above 204°C and an end point of at least 315°C.

17. The process of claim 1, 4, 7, 8 or 12 wherein said feedstock comprises deep cut gas oil, vacuum gas oil, thermal oil, residual oil, cycle stock, whole top crude, tar sand oil, shale oil, or a product of hydrotreatment thereof.

18. The process of claim 1, 4, 7, 8 or 12 wherein said catalyst composition further comprises from 0.01 ppm to 100 ppm by weight of platinum, palladium, iridium, osmium, rhodium, ruthenium or rhenium.

19. The process of Claim 18 wherein said catalyst composition further comprises another molecular sieve component structure of ZSM-5, ZSM-11, ZSM-22, ZSM-23, ZSM-35, ZSM-48, ZSM-57 or SAPO-31.

20. The process of Claim 18 wherein said catalyst composition further comprises a large-pore molecular sieve component of zeolites X, REX, Y, USY, REY, REUSY, DeAlY, UHPY, LZ-210, Beta, ZSM-20, L, silicoaluminophosphates SAPO-5, SAPO-37, SAPO-40, MCM-9, pillared silicates, pillared clays or mesoporous crystalline MCM-41.

## Patentansprüche

1. Verfahren zur Umwandlung eines Beschickungsmaterials aus Kohlenwasserstoffverbindungen in ein Produkt aus Kohlenwasserstoffverbindungen mit einem geringeren Molekulargewicht als die Kohlenwasserstoffverbindungen des Beschickungsmaterials, das den Kontakt des Beschickungsmaterials bei Umwandlungsbedingungen mit einer Katalysatorzusammensetzung umfaßt, die eine aktive Form eines synthetischen porösen kristallinen Materials umfaßt, **dadurch gekennzeichnet, daß** das synthetische poröse kristalline Material eine neue poröse kristalline Zusammensetzung mit der Bezeichnung MCM-58 ist, die ein Röntgenbeugungsdiagramm aufweist, das wie folgt ist:
| d-Netzebenenabstand (Å) | Relative Intensität, I/I₀ x 100 |
|---|---|
| 10,89 ± 0,30 | s-vs |
| 9,19 ± 0,30 | vw |
| 6,55 ± 0,29 | vw-w |
| 5,86 ± 0,28 | vw-w |
| 5,57 ± 0,27 | vw-w |
| 5,43 ± 0,26 | vw-w |
| 4,68 ± 0,25 | vw-m |
| 4,36 ± 0,25 | w-vs |
| 4,17 ± 0,23 | vw-m |
| 4,12 ± 0,23 | vw-s |
| 3,78 ± 0,20 | wv-s |
| 3,61 ± 0,15 | vw-w |
| 3,54 ± 0,15 | vw |
| 3,44 ± 0,15 | vw-m |
| 3,37 ± 0,15 | vw-m |
| 3,06 ± 0,15 | vw-w |
| 2,84 ± 0,15 | vw |
| 2,72 ± 0,13 | vw |
| 2,66 ± 0,12 | vw |
| 2,46 ± 0,12 | vw |
| 2,17 ± 0,10 | vw |
und eine Zusammensetzung aufweist, die das Molverhältnis hat:
X₂O₃ : (n)YO₂,
worin n mehr als 10 bis 1000 beträgt, X ein dreiwertiges Element ist und Y ein vierwertiges Element ist.

2. Verfahren nach Anspruch 1, wobei n mehr als 10 bis 400 beträgt.

3. Verfahren nach Anspruch 1, wobei n 20 bis 200 beträgt.

4. Verfahren nach Anspruch 1, 2 oder 3, wobei das kristalline Material Kationen umfaßt, die aus der Gruppe ausgewählt sind, die aus Wasserstoff, Wasserstoffvorstufen, Metallen der Seltenen Erden, Metallen der Gruppen IIA, IIIA, IVA, IB, IIB, IIIB, IVB, VIB und VIII des Periodensystems der Elemente und Kombinationen davon besteht.

5. Verfahren nach Anspruch 1, 2, 3 oder 4, wobei X dreiwertiges Bor, Eisen, Indium, Gallium, Aluminium oder eine Kombination davon ist und Y vierwertiges Silicium, Zinn, Germanium oder eine Kombination davon ist.

6. Verfahren nach Anspruch 5, wobei X Aluminium, Bor oder eine Kombination davon und Y Silicium umfassen.

7. Verfahren nach Anspruch 1, wobei die Katalysatorzusammensetzung eine Matrix aus Aluminiumoxid, Siliciumdioxid, Zirconiumdioxid, Titandioxid, Magnesiumoxid, Berylliumoxid, Ton oder einer Kombination davon umfaßt.

8. Verfahren nach Anspruch 1, wobei die Katalysatorzusammensetzung Phosphor umfaßt.

9. Verfahren nach Anspruch 1, wobei die Umwandlungsbedingungen eine Temperatur von 400 bis 650°C und einen Druck von Atmosphärendruck bis 5 Atmosphären einschließen.

10. Verfahren nach Anspruch 1, wobei die Umwandlungsbedingungen eine durchschnittliche Reaktortemperatur von 450 bis 540°C, ein Volumenverhältnis von Katalysator/Öl von 3 bis 7 und eine auf das Volumen bezogene stündliche Raumgeschwindigkeit von 1 bis 5 h⁻¹ einschließen.

11. Verfahren nach Anspruch 1, wobei die Umwandlungsbedingungen eine Temperatur an der Oberseite des Steigrohrs von 500 bis 595°C, ein Gewichtsverhältnis von Katalysator/Öl von 2 bis 12 und eine Verweilzeit des Katalysators von 0,5 bis 15 Sekunden einschließen.

12. Verfahren nach Anspruch 1, 4, 7 oder 8, wobei die Katalysatorzusammensetzung ferner eine andere Molekularsiebkomponente aus einem kristallinen Material mit großen Poren, das Porenöffnungen mit einem Durchmesser von mehr als 7 Angström aufweist, einem kristallinen Material mit mittleren Poren, das Porenöffnungen mit einem Durchmesser von 4 bis 7 Angström aufweist, einem kristallinen Material mit kleinen Poren, das Porenöffnungen mit einem Durchmesser von weniger als 4 Angström aufweist, oder Kombinationen davon umfaßt.

13. Verfahren nach Anspruch 1, 4, 7 oder 8, wobei die Katalysatorzusammensetzung ferner eine Molekularsiebkomponente aus der Gruppe umfaßt, die ZSM-5, ZSM-11, ZSM-22, ZSM-23, ZSM-35, ZSM-48, ZSM-57 oder SAPO-31 umfaßt.

14. Verfahren nach Anspruch 1, 4, 7 oder 8, wobei die Katalysatorzusammensetzung ferner eine Molekularsiebkomponente mit großen Poren aus den Zeolithen X, REX, Y, USY, REY, REUSY, DeAlY, UHPY, LZ-210, Beta, ZSM-20, L, den Silicoaluminophosphaten SAPO-5, SAPO-37, SAPO-40, MCM-9, gestützten Silicaten, gestützten Tonmaterialien oder mesoporösem kristallinem MCM-41 umfaßt.

15. Verfahren nach Anspruch 14, wobei die Molekularsiebkomponente mit großen Poren Y, REY, USY oder REUSY umfaßt.

16. Verfahren nach Anspruch 1, 4, 7, 8 oder 12, wobei das Beschickungsmaterial ein Gasöl mit einem Anfangssiedepunkt von mehr als 204°C und einem Endpunkt von mindestens 315°C umfaßt.

17. Verfahren nach Anspruch 1, 4, 7, 8 oder 12, wobei das Beschickungsmaterial schweres Gasöldestillat, Vakuumgasöl, Wärmeträgeröl, Rückstandsöl, Rückführöl, dem gesamten Topprückstand, Teersandöl, Schieferöl oder ein Produkt von deren Hydrobehandlung umfaßt.

18. Verfahren nach Anspruch 1, 4, 7, 8 oder 12, wobei die Katalysatorzusammensetzung ferner 0,01 bis 100 Gewichtsteile pro Million Platin, Palladium, Iridium, Osmium, Rhodium, Ruthenium oder Rhenium umfaßt.

19. Verfahren nach Anspruch 18, wobei die Katalysatorzusammensetzung ferner eine andere Molekularsiebkomponente mit der Struktur von ZSM-5, ZSM-11, ZSM-22, ZSM-23, ZSM-35, ZSM-48, ZSM-57 oder SAPO-31 umfaßt.

20. Verfahren nach Anspruch 18, wobei die Katalysatorzusammensetzung ferner eine Molekularsiebkomponente mit großen Poren aus den Zeolithen X, REX, Y, USY, REY, REUSY, DeAlY, UHPY, LZ-210, Beta, ZSM-20, L, den Silicoaluminophosphaten SAPO-5, SAPO-37, SAPO-40, MCM-9, gestützten Silicaten, gestützten Tonmaterialien oder mesoporösem kristallinem MCM-41 umfaßt.

## Revendications

1. Procédé pour convertir des hydrocarbures de charge pour produire des hydrocarbures ayant un poids moléculaire inférieur aux hydrocarbures de charge, lequel comprend la mise en contact de ladite charge dans des conditions de conversion avec une composition catalytique comprenant une forme active d'un matériau cristallin synthétique poreux, **caractérisé en ce que** la matériau cristallin synthétique poreux est une nouvelle composition cristalline poreuse, dénommée MCM-58, qui présente un spectre de diffraction aux rayons X comme suit :
| Distance inter-réticulaire d (A) 100 | Intensité relative I/Io x |
|---|---|
| 10,89 +/- 0,30 | s-vs |
| 9,19 +/- 0,30 | vw |
| 6,55 +/- 0,29 | vw-w |
| 5,86 +/- 0,28 | vw-w |
| 5,57 +/- 0,27 | vw-w |
| 5,43 +/- 0,26 | vw-w |
| 4,68 +/- 0,25 | vw-m |
| 4,36 +/- 0,25 | w-vs |
| 4,17 +/- 0,23 | vw-m |
| 4,12 +/- 0,23 | vw-s |
| 3,78 +/- 0,20 | wv-s |
| 3,61 +/- 0,15 | vw-w |
| 3,54 +/- 0,15 | vw |
| 3,44 +/- 0,15 | vw-m |
| 3,37 +/- 0,15 | vw-m |
| 3,06 +/- 0,15 | vw-w |
| 2,84 +/- 0,15 | vw |
| 2, 72 +/- 0,13 | vw |
| 2,66 +/- 0,12 | vw |
| 2,46 +/ 0,12 | vw |
| 2,17 +/- 0,10 | vw |
et présente une composition comprenant la relation molaire
X₂O₃ : (n)YO₂,
dans laquelle n est de supérieur à 10 à 1 000, X est un élément trivalent et Y est un élément tétravalent.

2. Procédé selon la revendication 1, dans lequel n est de supérieur à 10 à 400.

3. Procédé selon la revendication 1, dans lequel n est de 20 à 200.

4. Procédé selon la revendication 1, 2 ou 2, dans lequel ledit matériau cristallin comprend des cations sélectionnés à partir du groupe composé d'hydrogène, de précurseurs d'hydrogène, de métaux des terres rares, de métaux des groupes IIA, IIIA, IVA, IB, IIB, IIIB, IVB, VIB et VIII de la classification périodique des éléments et des combinaisons de ceux-ci.

5. Procédé selon la revendication 1, 2, 3 ou 4, dans lequel X est du bore, du fer, de l'indium, du gallium, de l'aluminium trivalent ou une combinaison de ceux-ci et Y est du silicium, de l'étain, du germanium quadrivalent ou une combinaison de ceux-ci.

6. Procédé selon la revendication 5, dans lequel X comprend de l'aluminium, du bore ou une combinaison de ceux-ci et Y comprend du silicium.

7. Procédé selon la revendication 1, dans lequel ladite composition catalytique comprend une matrice d'alumine, de silice, de zircone, de titane, de magnésie, d'oxyde de béryllium, d'argile ou une combinaison de ceux-ci.

8. Procédé selon la revendication 1, dans lequel ladite composition catalytique comprend du phosphore.

9. Procédé selon la revendication 1, dans lequel lesdites conditions de conversion comprennent une température entre 400°C et 650°C et une pression entre l'atmosphère et 5 atmosphères.

10. Procédé selon la revendication 1, dans lequel lesdites conditions de conversion comprennent une température de réacteur moyenne entre 450°C et 540°C, un rapport volumique de catalyseur/huile entre 2 et 7, et une vitesse spatiale horaire volumique entre 1 et 5 heure⁻¹.

11. Procédé selon la revendication 1, dans lequel lesdites conditions de conversion comprennent une température supérieure de colonne montante entre 500°C et 595°C, un rapport massique de catalyseur/huile entre 3 et 12 et un temps de séjour de catalyseur entre 0,5 et 15 secondes.

12. Prcédé selon la revendication 1, 4, 7 ou 8, dans lequel ladite composition catalytique comprend en outre un autre composant de tamis moléculaire en tamis de matériau cristallin à grands pores présentant des ouvertures de pore supérieures à 7 Angstroms de diamètre, un matériau cristallin à pores intermédiaires présentant des ouvertures de pore entre 4 Angstroms et 7 Angstroms de diamètre et un matériau cristalline à petits pores présentant des ouvertures de pore inférieures à 4 Angstroms de diamètre, ou des combinaisons de celles-ci.

13. Procédé selon la revendication 1, 4, 7 ou 8, dans lequel ladite composition catalytique comprend en outre un composant de tamis moléculaire du groupe comprenant du ZSM-5, ZSM-11, ZSM-22, ZSM-23, ZSM-35, ZSM-48, ZSM-57 ou SAPO-31.

14. Procédé selon la revendication 1, 4, 7 ou 8, dans lequel ladite composition catalytique comprend en outre un composant de tamis moléculaire à grands pores des zéolites X, REX, Y, USY, REY, REUSY, DeAlY, UHPY, LZ-210, Bêta, ZSM-20, L, silico-alumino-phosphates SAPO-5, SAPO-37, SAPO-40, MCM-9, silicates columnaires, argiles columnaires ou MCM-41 cristallin mésoporeux.

15. Procédé selon la revendication 14, dans lequel le composant de tamis moléculaire à grands pores comprend du Y, REY, USY ou REUSY.

16. Procédé selon la revendication 1, 4, 7, 8 ou 12, dans lequel ladite charge comprend un gazole présentant un point d'ébullition initial au-dessus de 204°C et un point de virage d'au moins 315°C.

17. Procédé selon la revendication 1, 4, 7, 8 ou 12, dans lequel ladite charge comprend un gazole à taille profonde, un gazole sous vide, de l'huile thermique, du fuel résiduel, une charge de recyclage, du pétrole brut, du pétrole extrait des sables asphaltiques, de l'huile de schiste ou un produit d'hydrotraitement de ceux-ci.

18. Procédé selon la revendication 1, 4, 7, 8 ou 12, dans lequel ladite composition catalytique comprend en outre entre 0,01 et 1 00 ppm en poids de platine, palladium, iridium, osmium, rhodium, ruthénium ou rhénium.

19. Procédé selon la revendication 18, dans lequel ladite composition catalytique comprend en outre une autre structure de composant de tamis moléculaire de ZSM-5, ZSM-11, ZSM-22, ZSM-23, ZSM-35, ZSM-48, ZSM-57 ou SAPO-31.

20. Procédé selon la revendication 18, dans lequel ladite composition catalytique comprend en outre un composant de tamis moléculaire à grands pores de zéolites X, REX, Y, USY, REY, REUSY, DeAlY, UHPY, LZ-210, Bêta, ZSM-20, L, silico-alumino-phosphates SAPO-5, SAPO-37, SAPO-40, MCM-9, silicates columnaires, argiles columnaires ou MCM-41 cristallin mésoporeux.
